# EUROPÄISCHE PATENTSCHRIFT

(11) **EP 3 148 735 B1**
(45) Veröffentlichungstag und Bekanntmachung des Hinweises auf die Patenterteilung: **28.07.2021**
(21) Anmeldenummer: 15727551.2
(22) Anmeldetag: 15.05.2015
(51) Int. Cl.: B23D 47/12, B27B 5/38, B25F 5/00

(54) **HANDGEFÜHRTES ARBEITSGERÄT**
HAND-HELD IMPLEMENT
OUTIL PORTATIF

(30) Priorität: 24.05.2014 DE 102014007878
(43) Veröffentlichungstag der Anmeldung: 05.04.2017
(73) Patentinhaber: Andreas Stihl AG & Co. KG, 71336 Waiblingen (DE)
(72) Erfinder: HANUSSEK, Sebastian, 71686 Remseck (DE); RIEGER, Jan, 71549 Auenwald (DE)
(74) Vertreter: Reinhardt, Annette
(86) Internationale Anmeldenummer: PCT/EP2015/001007
(87) Internationale Veröffentlichungsnummer: WO 2015/180828

(56) Entgegenhaltungen:
- EP-A1- 0 042 918
- WO-A1-2014/053469
- DE-A1- 19 805 857
- DE-A1- 19 838 480

## Beschreibung

Die Erfindung betrifft ein handgeführtes Arbeitsgerät der im Oberbegriff des Anspruchs 1 angegebenen Gattung.

Aus der DE 198 05 857 B4 ist eine verbrennungsmotorisch angetriebene Schneidmaschine bekannt, deren Werkzeug über einen Riementrieb angetrieben ist. Der Durchmesser der antreibenden Riemenscheibe ist dabei für beide Riemen des Riementriebs kleiner als der Durchmesser der angetriebenen Riemenscheibe, so dass die Drehzahl des Werkzeugs geringer als die Drehzahl des Verbrennungsmotors ist.

Aus der DE 10 2009 043 247 A1 geht ein Arbeitsgerät hervor, das eine an der Kupplungstrommel wirkende Bremseinrichtung umfasst. Die Bremseinrichtung wird im Betrieb von den Fliehgewichten der Fliehkraftkupplung in der gelösten Stellung gehalten. Erst wenn die Einkuppeldrehzahl unterschritten wird, kann die Bremseinrichtung das Werkzeug abbremsen.

**Aus der** DE 198 38 480 A1 **ist eine motorbetriebene Schneidmaschine bekannt, die mit einer Staubsammelvorrichtung ausgestattet ist. Der Antrieb der Trennscheibe der Schneidmaschine erfolgt über einen zweistufigen Riementrieb. Der erste Antriebsriemen treibt auch ein Lüfterrad der Staubsammelvorrichtung an. Zur Führung des Antriebsriemens sind Umlenkrollen vorgesehen.**

**Aus der** WO 2014/053469 A1 **ist ein Trennschleifer bekannt, der eine Bremseinrichtung mit einer Bandbremse besitzt.**

**Aus der** EP 0 042 918 A1 **ist eine elektromechanische Handwerkzeugmaschine bekannt, die eine Bandbremse umfasst. Der Antrieb des Werkzeugs erfolgt über einen Riementrieb.**

Der Erfindung liegt die Aufgabe zugrunde, ein handgeführtes Arbeitsgerät der gattungsgemäßen Art zu schaffen, das ein Abbremsen des Werkzeugs unabhängig von der Drehzahl des Werkzeugs ermöglicht.

Diese Aufgabe wird durch ein handgeführtes Arbeitsgerät mit den Merkmalen des Anspruchs 1 gelöst.

Es ist vorgesehen, dass die Bremseinrichtung auf den Riementrieb des Arbeitsgeräts wirkt. Die Bremseinrichtung kann dabei direkt oder indirekt, beispielsweise über eine Kupplungstrommel, auf den Riementrieb wirken. Der Riementrieb ist mit dem Werkzeug unabhängig von der Drehzahl des Werkzeugs gekoppelt, so dass über den Riementrieb ein Abbremsen des Werkzeugs bei jeder Drehzahl möglich ist. Insbesondere bei hohen Drehzahlen und wenn das Werkzeug ein Werkzeug mit großem Trägheitsmoment, beispielsweise eine Trennscheibe, ist, werden zum Abbremsen des Werkzeugs hohe Kräfte benötigt. Um die benötigten Kräfte zu verringern, ist vorgesehen, dass das Arbeitsgerät mindestens einen ersten Antriebsriemen einer ersten Antriebsstufe und einen zweiten Antriebsriemen einer zweiten Antriebsstufe besitzt. Die erste und die zweite Antriebsstufe bewirken jeweils eine Verringerung der Drehzahl. Die Drehzahl der angetriebenen Riemenscheibe jedes Antriebsriemens ist demnach geringer als die Drehzahl der antreibenden Riemenscheibe dieses Antriebsriemens. Durch die mindestens zweistufige Ausbildung des Riementriebs lässt sich eine ausreichend große Drehzahlverringerung bei insgesamt kompaktem Aufbau erzielen. Die Verringerung der Drehzahl des Werkzeugs bewirkt eine Verringerung der Trägheitskräfte am Werkzeug, so dass eine Bremsung des Werkzeugs über den Riementrieb ermöglicht wird. Um eine sichere Übertragung der Bremskraft auf das Werkzeug zu erreichen, ist vorgesehen, dass an mindestens einem Antriebsriemen mindestens eine Umlenkrolle anliegt. Über die Umlenkrolle wird die Spannung im Antriebsriemen aufrechterhalten und ein Abheben des Antriebsriemens von der Riemenscheibe wird vermieden. Dadurch kann die Übertragung eines ausreichend großen Bremsmoments auf das Werkzeug sichergestellt werden. Die Umlenkrolle vergrößert dabei vorteilhaft den Umschlingungswinkel an mindestens einer Riemenscheibe, über die der mindestens eine Antriebsriemen geführt ist. Dadurch kann mit der Bremseinrichtung ein schneller Stillstand des Werkzeugs erzielt werden.

**Zumindest** eine Umlenkrolle **liegt** an dem Antriebsriemen an, über den im Betrieb das höchste Antriebsmoment übertragen wird. Dies ist insbesondere der zweite Antriebsriemen, der die zweite, drehfest mit dem Werkzeug verbundene Riemenscheibe antreibt. Durch die Verringerung der Drehzahl in jeder Antriebsstufe erhöht sich das über jeweiligen Antriebsriemen zu übertragende Drehmoment entsprechend. Insbesondere bei Antriebsriemen, die ein hohes Antriebsmoment übertragen, kann über die Umlenkrolle auf einfache Weise ein Abheben des Antriebsriemens von der Riemenscheibe vermieden werden.

Vorteilhaft liegt an jedem Antriebsriemen eine Umlenkrolle an. Durch die Aufbringung der Riemenspannung über Umlenkrollen wird ein kompakter Aufbau des Arbeitsgeräts ermöglicht. Der Abstand der Drehachse der Riemenscheiben zueinander kann konstruktiv fest vorgegeben sein und muss zur Einstellung der Riemenspannung nicht veränderbar sein. Vorteilhaft ist jede Umlenkrolle so angeordnet, dass sich eine Vergrößerung des Umschlingungswinkels der Riemenscheiben ergibt.

Vorteilhaft sind die Umlenkrollen so angeordnet, dass im Bremsfall am Lasttrum jedes Antriebsriemens, der zwischen der ersten und der zweiten Riemenscheibe wirkt, eine Umlenkrolle anliegt. Die Umlenkrolle stellt sicher, dass die Bremskraft über das Lasttrum im Bremsfall übertragen werden kann und verhindert ein Abheben des Lasttrums von der Riemenscheibe. Dadurch kann die Bremseinrichtung so angeordnet werden, dass sie auf die antreibende, erste Riemenscheibe wirkt. Die Bremseinrichtung muss nicht an der Riemenscheibe angeordnet werden, mit der das Werkzeug verbunden ist, sondern kann entfernt vom Werkzeug angeordnet werden. Dadurch ergibt sich ein einfacher Aufbau. Das Lasttrum im Bremsfall ist das Trum jedes Antriebsriemens, über das beim Bremsvorgang die Bremskraft von der ersten Riemenscheibe auf die zweite Riemenscheibe übertragen wird.

Vorteilhaft ist die Umlenkrolle im Betrieb des Arbeitsgeräts ortsfest gehalten. Dadurch ist sichergestellt, dass die Umlenkrolle beim Bremsen nicht weggedrückt werden kann. Vorteilhaft ist die Umlenkrolle über eine lösbare Fixiereinrichtung ortsfest gehalten. Bei gelöster Fixiereinrichtung ist die Umlenkrolle vorteilhaft schwenkbar und gefedert gelagert. Dadurch, dass die Umlenkrolle im Betrieb ortsfest gehalten ist, kann die Feder so ausgelegt werden, dass sich bei gelöster Fixiereinrichtung die gewünschte Riemenspannung ergibt. Der Antriebsriemen kann damit auf einfache Weise durch Lösen und, nachdem die Federkraft auf die Umlenkrolle gewirkt und den Riemen gespannt hat, erneutes Feststellen der Fixiereinrichtung gespannt werden. Die Riemenspannung ist ohne Berücksichtigung der beim Bremsvorgang an der Umlenkrolle herrschenden Kräfte einstellbar, da die Umlenkrolle im Bremsfall ortsfest gehalten ist.

Vorteilhaft ist jede Riemenscheibe des Riementriebs über einen Umschlingungswinkel von mehr als etwa 170° von einem Antriebsriemen des Riementriebs umschlungen. Insbesondere ist jede Riemenscheibe des Riementriebs über einen Umschlingungswinkel von mehr als etwa 180° von einem Antriebsriemen des Riementriebs umschlungen. Dadurch ergeben sich insbesondere im Bremsfall hohe übertragbare Kräfte, so dass das Werkzeug gebremst werden kann. Vorteilhaft ist mindestens eine Riemenscheibe über einen Umschlingungswinkel von mehr als 220° von einem Antriebsriemen des Riementriebs umschlungen.

Ein einfacher Aufbau ergibt sich, wenn die Bremseinrichtung auf die erste Riemenscheibe wirkt. Dadurch kann die Bremseinrichtung entfernt vom Werkzeug, beispielsweise an der Abtriebsseite einer Fliehkraftkupplung des Arbeitsgeräts, angeordnet werden.

Um eine vergleichsweise große Reduzierung der Drehzahl des Werkzeugs gegenüber dem Antriebsmotor und dadurch vergleichsweise geringe am Werkzeug wirkende Trägheitskräfte zu erreichen, ist der Riementrieb mindestens zweistufig aufgebaut. Der Riementrieb umfasst einen ersten Antriebsriemen und einen zweiten Antriebsriemen, wobei der erste Antriebsriemen über die erste Riemenscheibe und eine dritte Riemenscheibe geführt ist, wobei die dritte Riemenscheibe mit einer vierten Riemenscheibe drehfest verbunden ist und wobei der zweite Antriebsriemen über die vierte Riemenscheibe geführt ist. Der Durchmesser der vierten Riemenscheibe ist dabei vorteilhaft kleiner als der Durchmesser der dritten Riemenscheibe. Es können auch ein oder mehrere weitere Antriebsriemen vorgesehen sein. Aufgrund der Umlenkrolle kann der Umschlingungswinkel an jeder Riemenscheibe trotz der unterschiedlichen Durchmesser der Riemenscheiben vergleichsweise groß gehalten werden. Die mindestens eine Umlenkrolle wirkt dabei vorteilhaft an der Außenseite eines Antriebsriemens und drückt den Antriebsriemen nach innen in Richtung auf das andere Trum des Riemens, so dass sich die Umschlingungswinkel an den Antriebsscheiben aufgrund der Umlenkung des Antriebsriemens an der Umlenkrolle vergrößern. Vorzugsweise ist die erste Riemenscheibe im Betrieb unmittelbar von dem Antriebsmotor angetrieben. Zwischen dem Antriebsmotor und der ersten Riemenscheibe ist demnach kein weiterer Antriebsriemen angeordnet. Zwischen der ersten Riemenscheibe und dem Antriebsmotor können jedoch weitere Elemente wie beispielsweise eine Kupplung angeordnet sein.

Ein einfacher Aufbau der Bremseinrichtung ergibt sich, wenn die Bremseinrichtung ein Bremsband umfasst, das auf eine Bremstrommel wirkt, wobei die Bremstrommel drehfest mit der ersten Riemenscheibe verbunden ist. Die Bremstrommel ist in besonders vorteilhafter Ausführung die Kupplungstrommel einer Fliehkraftkupplung des Arbeitsgeräts.

Vorteilhaft besitzt die Bremseinrichtung eine Bremsstellung und eine Freigabestellung. Die Bremseinrichtung ist vorteilhaft von einer Halteeinrichtung in der Freigabestellung gehalten und von einer Auslösefeder in Richtung auf die Bremsstellung vorgespannt. Durch die Vorspannung der Bremseinrichtung wird ein schnelles Auslösen der Bremseinrichtung mit geringen Auslösekräften ermöglicht. Vorteilhaft besitzt das Arbeitsgerät ein Betätigungselement, über das die Bremseinrichtung aus der Bremsstellung in die Freigabestellung verstellbar ist. Das Betätigungselement ist vorteilhaft vom Bediener zu betätigen und kann beispielsweise ein Betätigungshebel oder dgl. sein. Beim Verstellen der Bremseinrichtung aus der Bremsstellung in die Freigabestellung wird vorteilhaft die Auslösefeder der Bremseinrichtung gespannt.

Ein einfacher Aufbau ergibt sich, wenn die Halteeinrichtung einen Elektromagneten umfasst. Dadurch ist zum einen eine sichere Fixierung der Bremseinrichtung in der Freigabestellung gewährleistet. Zum anderen kann das Auslösen der Bremseinrichtung elektronisch erfolgen. Vorteilhaft besitzt das Arbeitsgerät eine Steuerungseinrichtung und einen Sensor, wobei die Steuerungseinrichtung bei Vorliegen mindestens eines von dem Sensor ermittelten Auslösekriteriums ein Lösen der Halteeinrichtung verursacht. Der Sensor ist vorzugsweise ein Drehratensensor, der die Winkelgeschwindigkeit einer Bewegung des Arbeitsgeräts um eine zur Drehachse des Werkzeugs parallelen Achse ermittelt. Ein Auslösekriterium ist vorteilhaft das Überschreiten einer vorgegebenen Winkelgeschwindigkeit um diese Achse. Bewegt sich das Arbeitsgerät in unzulässiger Weise, so kann diese Bewegung über den Drehratensensor erfasst und die Bremseinrichtung ausgelöst werden. Neben diesem Auslösekriterium können weitere Auslösekriterien herangezogen werden.

Vorteilhaft wird die Bremseinrichtung in Abhängigkeit einer Drehzahlschwelle, insbesondere bei Unterschreiten einer Drehzahlschwelle, ausgelöst.

Vorteilhaft ist vorgesehen, dass die Drehzahl der zweiten Riemenscheibe höchstens 60% der Drehzahl der ersten Riemenscheibe beträgt. Das Arbeitsgerät ist vorzugsweise ein Trennschleifer und das Werkzeug eine Trennscheibe. Die Drehzahl der Trennscheibe beträgt insbesondere weniger als etwa 4.000 Umdrehungen pro Minute. Vorteilhaft beträgt die Drehzahl der Trennscheibe weniger als etwa 3.000 Umdrehungen pro Minute. Dadurch ergibt sich ein vergleichsweise geringes Trägheitsmoment der Trennscheibe im Betrieb, so dass über den Riementrieb eine ausreichend große Bremskraft auf die Trennscheibe übertragbar ist.

Ein Ausführungsbeispiel der Erfindung wird im Folgenden anhand der Zeichnung erläutert. Es zeigen:
- Fig. 1: eine Seitenansicht eines Trennschleifers,
- Fig. 2: eine schematische Schnittdarstellung des Trennschleifers aus Fig.1,
- Fig. 3: eine Seitenansicht auf den Ausleger des Trennschleifers aus Fig. 1 mit abgenommenem Deckel und mit daran angeordnetem Antriebsmotor und daran angeordneter Schutzhaube,
- Fig. 4 und Fig. 5: einen Ausschnitt aus Fig. 3, der den Riementrieb zeigt,
- Fig. 6: eine Seitenansicht der Bremseinrichtung am Ausleger in Bremsstellung,
- Fig. 7: eine Seitenansicht der Bremseinrichtung in Bremsstellung ohne den Ausleger,
- Fig. 8: einen Ausschnitt aus Fig. 7 mit teilgeschnittenem Auslösehebel,
- Fig. 9: die Anordnung aus Fig. 8 in Freigabestellung,
- Fig. 10: eine Draufsicht auf die Anordnung aus Fig. 3,
- Fig. 11: einen Schnitt entlang der Linie XI-XI in Fig. 10,
- Fig. 12: eine perspektivische Darstellung der Anordnung aus Fig. 3,
- Fig. 13: den Ausschnitt XIII aus Fig. 12 in vergrößerter Darstellung,
- Fig. 14: die Anordnung aus Fig. 13 in Explosionsdarstellung und
- Fig. 15: einen Schnitt durch die Umlenkrolle aus Fig. 13,
- Fig. 16 und 17: perspektivische Darstellungen eines Auslösehebels eines Trennschleifers,
- Fig. 18: eine Explosionsdarstellung des Auslösehebels im Bereich der Halteplatte,
- Fig. 19: eine Schnittdarstellung durch den Bereich der Halteplatte des Auslösehebels.

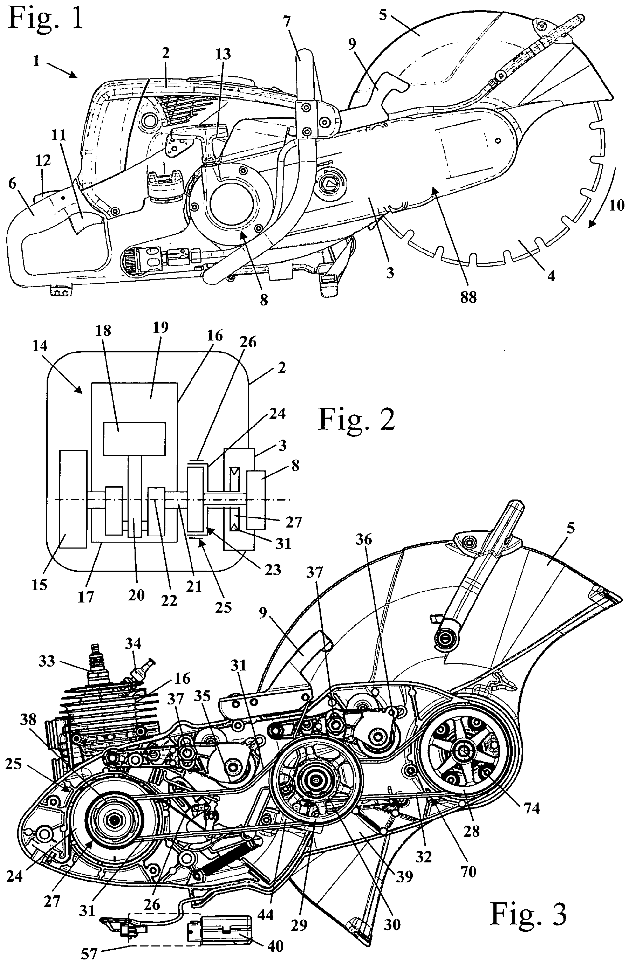

Fig. 1 zeigt als Ausführungsbeispiel für ein handgeführtes Arbeitsgerät einen Trennschleifer 1. Der Trennschleifer 1 besitzt ein Gehäuse 2, an dem ein Ausleger 3 festgelegt ist. Am freien Ende des Auslegers 3 ist ein Werkzeug 4, nämlich eine Trennscheibe, drehbar gelagert. Im Betrieb wird das Werkzeug 4 in einer Drehrichtung 10 rotierend angetrieben. Das Werkzeug 4 ist über einen Teil seines Umfangs von einer Schutzhaube 5 abgedeckt, die im Ausführungsbeispiel einteilig mit einem Gehäuseteil 39 (Fig. 3) des Auslegers 3 ausgebildet ist. Die Schutzhaube 5 und das Gehäuseteil 39 des Auslegers 3 können beispielsweise aus Metall bestehen und in einem Gussverfahren hergestellt sein. Der Ausleger 3 umfasst einen Deckel 88, der das Gehäuseteil 39 verschließt. Am Ausleger 3 ist ein Betätigungselement 9 angeordnet, das im Ausführungsbeispiel als Betätigungshebel ausgebildet ist und zur Betätigung einer im Folgenden noch näher beschriebenen Bremseinrichtung dient.

Am Gehäuse 2 ist ein Handgriff 6 angeordnet, der im Ausführungsbeispiel als hinterer Handgriff ausgebildet und an der dem Werkzeug 4 abgewandten Seite des Gehäuses 2 angeordnet ist. Der Ausleger 3 ragt auf der dem Handgriff 6 abgewandten Seite des Gehäuses 2 nach vorn. Am Handgriff 6 sind ein Gashebel 11 und eine Gashebelsperre 12 schwenkbar gelagert. Am Gehäuse 2 ist außerdem ein Griffrohr 7 festgelegt, das das Gehäuse 2 an der dem Werkzeug 4 zugewandten Seite des Gehäuses 2 übergreift. Der Trennschleifer 1 besitzt eine Anwerfvorrichtung 8 für einen Antriebsmotor 14 (Fig. 2). Zur Betätigung der Anwerfvorrichtung 8 dient ein Anwerfgriff 13, der aus dem Gehäuse 2 ragt.

Fig. 2 zeigt den Aufbau des Antriebs des Trennschleifers 1 näher. Der Antriebsmotor 14 ist als Verbrennungsmotor ausgebildet und besitzt einen Zylinder 16, in dem ein Brennraum 19 ausgebildet ist. Der Antriebsmotor 14 ist als Einzylindermotor ausgebildet. Der Brennraum 19 ist von einem Kolben 18 begrenzt, der über ein Pleuel 20 eine in einem Kurbelgehäuse 17 um eine Drehachse 22 drehbar gelagerte Kurbelwelle 21 rotierend antreibt. An der Kurbelwelle 21 ist ein Schwungrad 15 festgelegt, das als Lüfterrad ausgebildet sein und zur Förderung von Kühlluft dienen kann. An der dem Schwungrad 15 abgewandten Seite des Antriebsmotors 14 ist eine Fliehkraftkupplung 23 angeordnet. Die Fliehkraftkupplung 23 umfasst eine Kupplungstrommel, die als Bremstrommel 24 für eine Bremseinrichtung 25 dient. Am Außenumfang der Bremstrommel 24 ist ein Bremsband 26 angeordnet. Mit der Bremstrommel 24 ist eine erste Riemenscheibe 27 eines Riementriebs 70 (Fig. 3) drehfest verbunden. An der ersten Riemenscheibe 27 ist ein erster Antriebsriemen 31 gehalten. Die Anwerfvorrichtung 8 ist drehfest mit der Kurbelwelle 21 verbunden und an der der Fliehkraftkupplung 23 abgewandten Seite der ersten Riemenscheibe 27 angeordnet. Im Ausführungsbeispiel ist der Antriebsmotor 14 ein Zweitaktmotor. Der Antriebsmotor 14 kann jedoch auch ein Viertaktmotor sein.

Fig. 3 zeigt den Aufbau des Riementriebs 70 im Einzelnen. Der Riementrieb 70 umfasst die erste Riemenscheibe 27 sowie eine zweite Riemenscheibe 28. Die zweite Riemenscheibe 28 ist drehfest mit dem Werkzeug 4 verbunden und um eine Drehachse 74 drehbar gelagert. Die Drehachse 74 ist die Drehachse des Werkzeugs 4. Der erste Antriebsriemen 31 ist über die erste Riemenscheibe 27 und eine dritte Riemenscheibe 29 geführt. Der erste Antriebsriemen 31 bildet mit der ersten Riemenscheibe 27 und der dritten Riemenscheibe 29 eine erste Antriebsstufe. Mit der dritten Riemenscheibe 29 ist eine vierte, in Fig. 3 schematisch gezeigte Riemenscheibe 30 drehfest verbunden. Über die vierte Riemenscheibe 30 und die zweite Riemenscheibe 28 ist ein zweiter Antriebsriemen 32 geführt. Der zweite Antriebsriemen 32 bildet mit der vierten Riemenscheibe 30 und der zweiten Riemenscheibe 28 eine zweite Antriebsstufe. Am ersten Antriebsriemen 31 liegt eine erste Umlenkrolle 35 an. Die Position der ersten Umlenkrolle 35 ist über eine Fixiereinrichtung 37 fixierbar. Am zweiten Antriebsriemen 32 liegt eine Umlenkrolle 36 an, deren Position ebenfalls über eine Fixiereinrichtung 37 fixierbar ist. Wie Fig. 3 auch zeigt, ist mit der Bremstrommel 24 eine Eingriffskontur 38 für die Anwerfvorrichtung 8 drehfest verbunden. Am Zylinder 16 sind eine Zündkerze 33 sowie ein Dekompressionsventil 34 angeordnet. Wie Fig. 3 auch zeigt, besitzt der Trennschleifer 1 einen Drehratensensor 40, der mit einer Steuerungseinrichtung 57 verbunden ist. Mit der Steuerungseinrichtung 57 ist auch ein im Folgenden noch näher beschriebener Elektromagnet 44 verbunden.

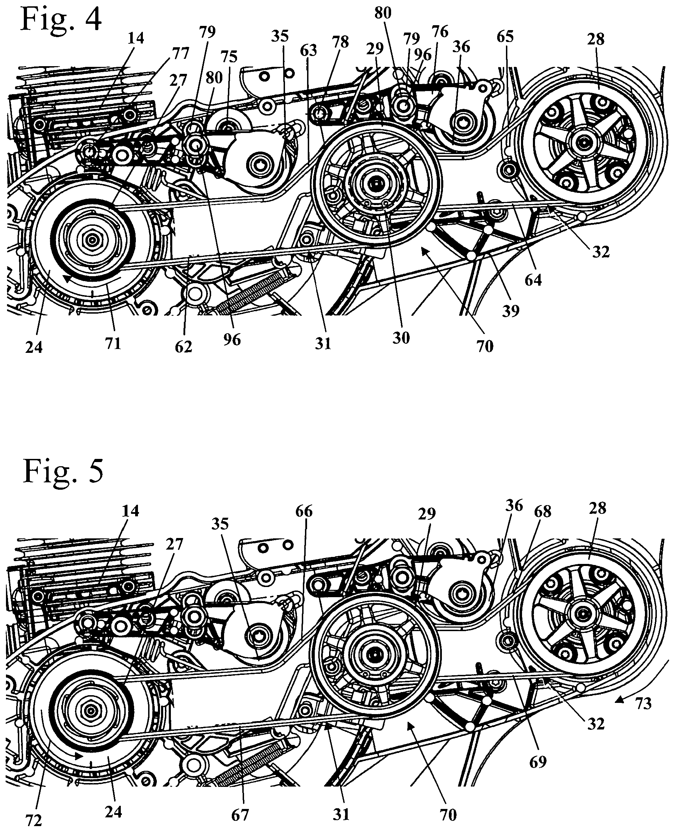

Fig. 4 zeigt den Riementrieb 70 im Antriebsfall. Die Bremstrommel 24 ist in Richtung des Pfeils 71 von dem Antriebsmotor 14 angetrieben. Die Antriebskraft wird über ein Lasttrum 62 des ersten Antriebsriemens 31 auf die dritte Riemenscheibe 29 übertragen. Das andere, in Fig. 4 oben dargestellte Trum des Antriebsriemens 31 ist im Antriebsfall das Leertrum 63. Am Leertrum 63 liegt im Antriebsfall die Umlenkrolle 35 an. Der zweite Antriebsriemen 32 besitzt ein Lasttrum 64, von dem die Antriebskraft von der vierten Riemenscheibe 30 auf die zweite Riemenscheibe 28 übertragen wird. Das andere, in Fig. 4 ebenfalls oben dargestellte Trum des zweiten Antriebsriemens 32 ist das Leertrum 65, an dem die Umlenkrolle 36 anliegt.

Wie Fig. 4 zeigt, ist die erste Umlenkrolle 35 an einem Schwenkhebel 75 um eine Schwenkachse 77 schwenkbar am Gehäuseteil 39 gelagert. Der Schwenkhebel 75 besitzt eine Nut 79, durch die ein Schraubbolzen 96 ragt, auf den eine Mutter 80 aufgeschraubt ist. Die Mutter 80 bildet mit dem Schraubbolzen 96 die Fixiereinrichtung 37 (Fig. 3).

Die zweite Umlenkrolle 36 ist an einem entsprechenden Schwenkhebel 76 gelagert, der um eine Schwenkachse 78 schwenkbar am Gehäuseteil 39 gelagert ist. Der Schwenkhebel 76 besitzt ebenfalls eine Nut 79, durch die ein Schraubbolzen 96 ragt, auf den eine Mutter 80 aufgeschraubt ist, und mit diesem die Fixiereinrichtung 37 (Fig. 3) der Umlenkrolle 36 bildet.

Fig. 5 zeigt die Anordnung im Bremsfall. An der Bremstrommel 24 wirkt die vom Bremsband 26 (Fig. 3) aufgebrachte Bremskraft in Richtung des Pfeils 72. Das Lasttrum 62 des Antriebsfalls ist im Bremsfall das Leertrum 67. Das Leertrum 63 im Antriebsfall ist im Bremsfall das Lasttrum 66, an dem die Umlenkrolle 35 anliegt. Entsprechend ist das Lasttrum 64 des zweiten Antriebsriemens 32 im Bremsfall das Leertrum 69, und das Leertrum 65 im Antriebsfall ist das Lasttrum 68 im Bremsfall. Am Lasttrum 68 im Bremsfall liegt die Umlenkrolle 36 an. An der zweiten Riemenscheibe 28 wirkt die Trägheitskraft des Werkzeugs 4 in Richtung des Pfeils 73. Der Pfeil 73 zeigt in Drehrichtung 10 des Werkzeugs 4 (Fig. 1).

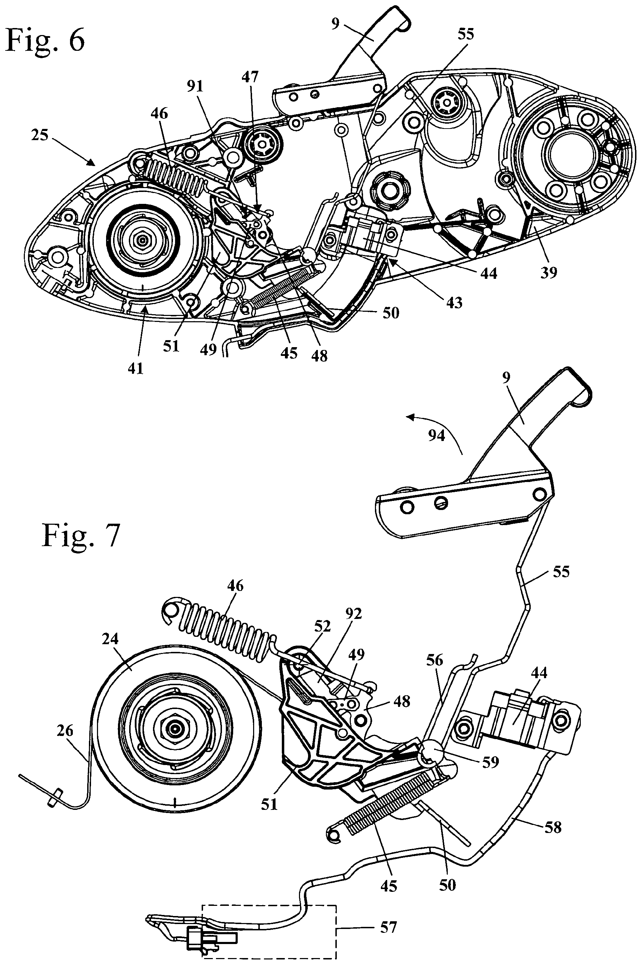

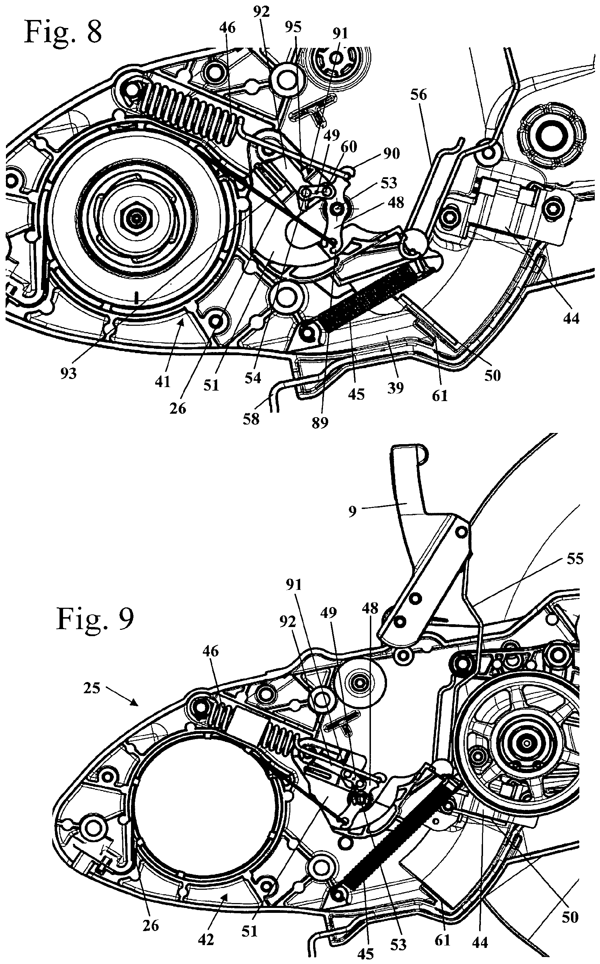

Die Figuren 6 bis 9 zeigen die Bremseinrichtung 25 im Einzelnen. In den Figuren 6 bis 8 ist die Bremseinrichtung 25 in ihrer Bremsstellung 41 gezeigt. In dieser Stellung ist das Bremsband 26 (Fig. 7) fest um den Außenumfang der Bremstrommel 24 gezogen und bremst dadurch die Bremstrommel 24 und den Riementrieb 70. Die Bremseinrichtung 25 besitzt eine Hebelanordnung 47, die einen Hebel 48, einen Auslösehebel 51 sowie eine Kniehebelanordnung 91 umfasst. Die Kniehebelanordnung 91 besitzt einen ersten Gelenkhebel 49 und einen zweiten Gelenkhebel 92. Wie Fig. 8 zeigt, ist der Hebel 48 um eine Schwenkachse 53 am ersten Gehäuseteil 39 gelagert. An einem ersten Ende 89 des Hebels 48 ist das Bremsband 26 gehalten. An einem zweiten Ende 90 des Hebels 48 greift eine Bremsfeder 46 an, die die Bremseinrichtung 25 in Richtung auf die Bremsstellung 41 vorspannt. Der Auslösehebel 51 ist um eine in Fig. 7 gezeigte Schwenkachse 52 schwenkbar am Gehäuseteil 39 (Fig. 6) gehalten. Wie Fig. 8 zeigt, ist der erste Gelenkhebel 49 um eine Schwenkachse 54 schwenkbar am zweiten Gelenkhebel 92 gelagert. Der zweite Gelenkhebel 92 ist mit Spiel am Auslösehebel 51 gehalten und zum Toleranzausgleich geringfügig um die Schwenkachse 52 des Auslösehebels 51 schwenkbar. Der zweite Gelenkhebel 92 ist dabei zwischen Betätigungskonturen 93 und 95 des Auslösehebels 51 gehalten. Das zweite Ende des ersten Gelenkhebels 49 ist um eine Schwenkachse 60 schwenkbar am Hebel 48 festgelegt. Der Auslösehebel 51 ist über eine in Fig. 8 gezeigte Auslösefeder 45 in Richtung auf die Bremsstellung 41 vorgespannt. Der Auslösehebel 51 besitzt eine Halteplatte 50, die in der Freigabestellung 42 der Bremseinrichtung 25 mit einem Elektromagneten 44 zusammenwirkt. Der Elektromagnet 44 bildet mit der Halteplatte 50 eine Halteeinrichtung 43, die die Bremseinrichtung 25 in ihrer Freigabestellung 42 (Fig. 9) hält. Am Auslösehebel 51 greift außerdem ein in Fig. 6 gezeigtes Koppelelement 55 an, das mit dem Betätigungselement 9 verbunden ist.

Wie Fig. 7 zeigt, umfasst das Koppelelement 55 eine Längsführung 56. Der Auslösehebel 51 ist mit einem Lagerelement 59 in der Längsführung 56 geführt. Wird das Betätigungselement 9 aus der in Fig. 7 gezeigten Stellung in Richtung des Pfeils 94 in die in Fig. 9 gezeigte Stellung verschwenkt, so nimmt das Koppelelement 55 den Auslösehebel 51 an dem Lagerelement 59 mit und verschwenkt diesen um die Schwenkachse 52 (Fig. 7). Dabei werden die Auslösefeder 45 und die Bremsfeder 46 gespannt. Die Halteplatte 50 gelangt an den Elektromagneten 44. Der Elektromagnet 44 ist im Betrieb des Trennschleifers 1 bestromt und hält dadurch die magnetische Halteplatte 50. Dadurch ist die Bremseinrichtung 25 in ihrer in Fig. 9 gezeigten Freigabestellung 42 gehalten. Die Energie zum Bestromen des Elektromagneten 44 wird im Betrieb aufgrund der Rotation der Kurbelwelle 21 erzeugt. Sinkt die Drehzahl des Antriebsmotors 14 und damit auch der Kurbelwelle 21 unter eine konstruktiv vorgegebene Drehzahl, so reicht die Energie des Elektromagneten 44 nicht mehr aus, die Halteplatte 50 zu halten. Der Auslösehebel 51 wird von der Auslösefeder 45 verschwenkt, und die Bremseinrichtung 25 wird in ihre Bremsstellung 41 verstellt. Beim Stillstand des Antriebsmotors 14 befindet sich die Bremseinrichtung 25 dadurch in ihrer Bremsstellung 41. Es kann vorgesehen sein, weitere Energiespeichereinrichtungen vorzusehen, die den Elektromagneten 44 mit Energie versorgen. Dadurch kann die Drehzahl, bei deren Unterschreiten die Bremseinrichtung 25 in ihre Bremsstellung 41 verstellt wird, zu niedrigen Drehzahlen hin verschoben werden. Die zusätzlichen Energiespeichereinrichtungen können beispielsweise Akkus, Kondensatoren, eine mechanische Schwungmasse oder dgl. sein.

Wie die Figuren 8 und 9 zeigen, verschwenkt der Auslösehebel 51 bei einer Verschwenkung aus der Bremsstellung 41 (Fig. 8) in die Freigabestellung 42 (Fig. 9) um die Schwenkachse 52. Der Auslösehebel 51 nimmt dabei den zweiten Gelenkhebel 92 über die Betätigungskontur 93 mit. Dabei wird der Totpunkt der Kniehebelanordnung 91 überwunden. Die Bremsfeder 46 wird beim Verschwenken des Hebels 48 gespannt und das Bremsband 26 gelöst.

Zum Auslösen der Bremseinrichtung wird die Stromzufuhr zum Elektromagneten 44 unterbrochen oder die dem Elektromagneten 44 zur Verfügung gestellte Energie sinkt aufgrund sinkender Drehzahl unter eine konstruktiv vorgegebene Schwelle. Die Halteplatte 50 ist dadurch nicht mehr am Elektromagneten 44 gehalten. Aufgrund der Vorspannung der Auslösefeder 45 wird der Auslösehebel 51 verschwenkt. Der Auslösehebel 51 nimmt den zweiten Gelenkhebel 92 über die Betätigungskontur 95 mit und verstellt dadurch die Kniehebelanordnung 91 über ihre Totpunktlage in eine Stellung, in der die Bremsfeder 46 auf den Hebel 48 wirkt. Aufgrund der Kraft der Bremsfeder 46 verschwenkt der Hebel 48 und spannt dabei das Bremsband 26. Dadurch kann die Anordnung mit geringer Kraft in der Freigabestellung 42 gehalten werden, und zum Auslösen des Bremsvorgangs wird nur eine geringe Kraft am Auslösehebel 51 benötigt. Die Auslösefeder 45 muss lediglich den Auslösehebel 51 so weit verschwenken, bis der Totpunkt der Kniehebelanordnung 91 überwunden ist. Hierfür werden nur eine geringe Kraft und ein geringer Federweg benötigt. Als Auslösefeder 45 kann beispielsweise auch eine Schenkelfeder vorgesehen sein. Die Bremskraft selbst wird von der vorgespannten Bremsfeder 46 aufgebracht.

Wie die Figuren 8 und 9 auch zeigen, ist am Gehäuseteil 39 ein Anschlag 61 für den Auslösehebel 51 ausgebildet. Der Anschlag 61 ist vorteilhaft aus einem elastischen Material ausgebildet und dient dazu, die Halteplatte 50 bei Verstellung der Bremseinrichtung 25 in die Bremsstellung 41 abzufedern. Es kann auch vorgesehen sein, alternativ einen Anschlag für den Auslösehebel 51 vorzusehen. Der Anschlag aus elastischem Material kann dabei am Gehäuseteil 39 und/oder am Auslösehebel 51 bzw. an der Halteplatte 50 vorgesehen sein.

Aufgrund der Entkopplung der Position des Betätigungselements 9 von der Position des Lagerelements 59 über die Längsführung 56 kann das Betätigungselement 9 nach dem Verschwenken in Richtung des Pfeils 94 in Fig. 7, also nach dem Verstellen der Bremseinrichtung 25 von der Freigabestellung 42 in die Bremsstellung 41, zurückgeschwenkt werden. Die Bremseinrichtung 25 wird dabei von der Halteeinrichtung 43 in der in Fig. 9 gezeigten Bremsstellung 41 gehalten.

Im Betrieb des Trennschleifers 1 ist vorgesehen, dass der Bediener die Bremseinrichtung vor dem Beginn des Arbeitens mit dem Trennschleifer in die Freigabestellung 42 verstellt. Wie Fig. 7 zeigt, ist der Elektromagnet 44 über eine Anschlussleitung 58 mit der Steuerungseinrichtung 57 verbunden, die gemäß Fig. 3 auch mit dem Drehratensensor 40 verbunden ist. Der Drehratensensor 40 ermittelt die Winkelgeschwindigkeit einer Bewegung des Arbeitsgeräts um eine zur Drehachse 74 des Werkzeugs 4 parallele Achse. Sobald eine vorgegebene Winkelgeschwindigkeit um diese Achse überschritten ist und von der Steuerungseinrichtung 57 aufgrund der vom Drehratensensor 40 gelieferten Werte erkannt wird, löst die Steuerungseinrichtung 57 die Bremseinrichtung 25 aus, indem sie die Stromzufuhr zum Elektromagneten 44 unterbricht. Dies bewirkt ein Lösen der Halteeinrichtung 43. Die Auslösefeder 45 und die Bremsfeder 46 verstellen die Bremseinrichtung 25 bei gelöster Halteeinrichtung 43 in die Bremsstellung 41 und bremsen die Bremstrommel 24. Über die Antriebsriemen 31 und 32 wird das Werkzeug 4 gebremst. Sinkt die Drehzahl des Antriebsmotors 14 unter eine konstruktiv vorgegebene Drehzahlschwelle, so reicht die Energie des Elektromagneten 44 nicht mehr aus, um die Bremseinrichtung 25 in der Freigabestellung 52 zu halten, und die Bremseinrichtung 25 wird in ihre Bremsstellung 41 verstellt.

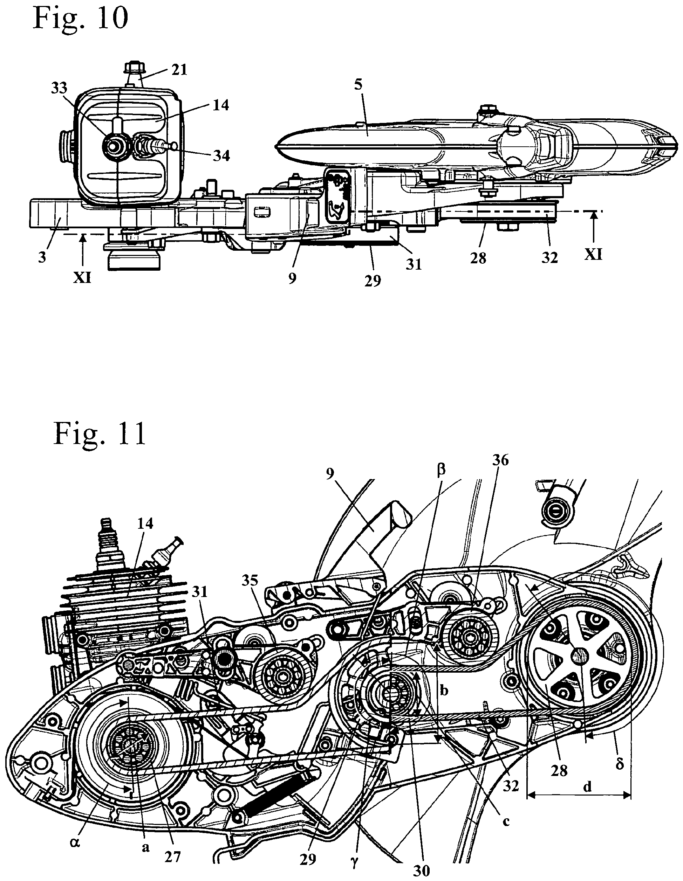

Die Schnittdarstellung in Fig. 11, die den in Fig. 10 gezeigten Schnitt durch den Riementrieb 70 zeigt, zeigt die Durchmesser und Umschlingungswinkel an den Riemenscheiben 27 bis 30. Die erste Riemenscheibe 27 besitzt einen Durchmesser a und ist vom ersten Antriebsriemen 31 über einen Umschlingungswinkel α umschlungen, der vorteilhaft mindestens etwa 170°, insbesondere mehr als etwa 180° beträgt. Im Ausführungsbeispiel beträgt der Umschlingungswinkel α näherungsweise 180°. Die dritte Riemenscheibe 29 besitzt einen Durchmesser b, der deutlich größer als der Durchmesser a der ersten Riemenscheibe 27 ist. Die dritte Riemenscheibe 29 ist über einen Umschlingungswinkel β vom ersten Antriebsriemen 31 umschlungen, der vorteilhaft mehr als etwa 170°, insbesondere mehr als etwa 180° beträgt. Vorzugsweise beträgt der Umschlingungswinkel β mindestens etwa 220°.

Die vierte Riemenscheibe 30 besitzt einen Durchmesser c, der deutlich kleiner als der Durchmesser b der dritten Riemenscheibe 29 ist. Der Durchmesser b kann beispielsweise das Doppelte, vorzugsweise mindestens das 2,5fache des Durchmessers c betragen. Die vierte Riemenscheibe 30 ist vom zweiten Antriebsriemen 32 über einen Umschlingungswinkel γ umschlungen, der vorteilhaft mindestens etwa 170°, insbesondere mindestens etwa 180° beträgt.

Die zweite Riemenscheibe 28 besitzt einen Durchmesser d, der vorzugsweise etwa dem Durchmesser b der dritten Riemenscheibe 29 entsprechen kann. Der Durchmesser d ist deutlich größer als der Durchmesser c der vierten Riemenscheibe 30. Der Durchmesser d kann beispielsweise mindestens das Doppelte, vorzugsweise mindestens das 2,5fache des Durchmessers c betragen. Die zweite Riemenscheibe 28 ist vom zweiten Antriebsriemen 32 über einen Umschlingungswinkel δ umschlungen, der vorteilhaft mehr als etwa 180°, insbesondere mindestens etwa 220° beträgt. Die vergleichsweise großen Umschlingungswinkel γ und δ werden aufgrund der Umlenkrollen 35 und 36 erreicht. Aufgrund der unterschiedlichen Durchmesser der Riemenscheiben 28 bis 30 wird erreicht, dass die Drehzahl der zweiten Riemenscheibe 28 deutlich kleiner als die Drehzahl der ersten Riemenscheibe 27 ist. Vorteilhaft beträgt die Drehzahl der zweiten Riemenscheibe 28 höchstens etwa 60% der Drehzahl der ersten Riemenscheibe 27. Die Drehzahl des Werkzeugs 4, nämlich der Trennscheibe des Trennschleifers 1 beträgt vorteilhaft weniger als etwa 4.000 Umdrehungen pro Minute, vorzugsweise weniger als etwa 3.000 Umdrehungen pro Minute. Aufgrund der geringeren Drehzahl der zweiten Riemenscheibe 28 ist das auf die zweite Riemenscheibe 29 übertragene Drehmoment deutlich größer als das von der ersten Riemenscheibe 27 auf den ersten Antriebsriemen 31 übertragene Drehmoment. Erfindungsgemäß liegt daher an der zweiten Antriebsstufe eine Umlenkrolle 36 am Antriebsriemen 32 an.

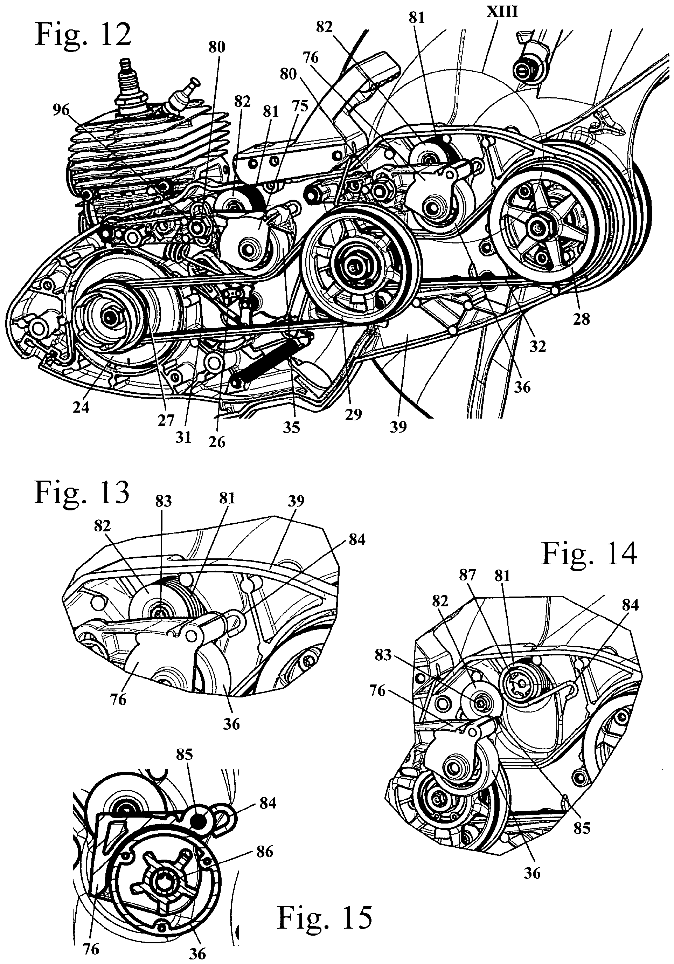

Die Figuren 12 bis 15 zeigen die Gestaltung und Lagerung der Umlenkrollen 35 und 36 im Einzelnen. Die beiden Schwenkhebel 75 und 76 sind vorteilhaft gleich ausgebildet. Benachbart zu jeder Umlenkrolle 35, 36 ist eine Feder 81 am Gehäuseteil 39 gelagert, die im Ausführungsbeispiel als Drehfeder ausgebildet ist. Die Feder 81 ist von einem Halteteller 82 an ihrer Stirnseite abgedeckt und dadurch axial fixiert. Wie Fig. 13 zeigt, ist der Halteteller 82 mit einer Befestigungsschraube 83 am Gehäuseteil 39 fixiert. Die Feder 81 besitzt ein Ende 84, das auf den Schwenkhebel 76 wirkt. Wie Fig. 14 zeigt, ist am Schwenkhebel 76 ein Zapfen 85 gehalten, an dem das Ende 84 der Feder 81 angreift. Die Feder 81 ist auf einem Lagerstutzen 87 des Gehäuseteils 39 gehalten. Wie

Fig. 15 zeigt, ist die Umlenkrolle 36 an einem Lagerbolzen 86 drehbar am Schwenkhebel 76 gelagert. Das zweite Ende der Feder 81 stützt sich am Gehäuseteil 39 ab. Die Lagerung der Umlenkrolle 35 am Schwenkhebel 75 ist entsprechend der Lagerung der Umlenkrolle 36 ausgebildet.

Zum Spannen der Antriebsriemen 31 und 32 werden die Muttern 80 an den Schwenkhebeln 75 und 76 gelöst. Dadurch wirkt jeweils eine Feder 81 über einen Zapfen 85 auf den Schwenkhebel 75 und den Schwenkhebel 76, der dadurch mit der vorgegebenen Kraft gegen den Antriebsriemen 31 und 32 gedrückt wird. Anschließend werden die Muttern 80 fixiert, so dass die Schwenkhebel 75 und 76 ortsfest am Gehäuseteil 39 gehalten sind. Beim Bremsvorgang liegen die Umlenkrollen 35 und 36 am Lasttrum 66 bzw. 68 der Antriebsriemen 31, 32 an. Dadurch, dass die Umlenkrollen ortsfest am Gehäuseteil 39 gehalten sind, können ausreichend große Kräfte über den Riementrieb 70 auf das Werkzeug 4 übertragen werden.

Im Ausführungsbeispiel wirkt die Bremseinrichtung 25 auf die erste Riemenscheibe 27. Es kann jedoch auch vorgesehen sein, dass die Bremseinrichtung 25 auf die vierte Riemenscheibe 30 wirkt. Auch die vierte Riemenscheibe 30 ist eine antreibende Riemenscheibe. Bei Anordnung einer Bremseinrichtung 25 an der vierten Riemenscheibe 30 ergibt sich ein einfacher Aufbau, da die Bremseinrichtung 25 nicht an der angetriebenen Riemenscheibe 28, also nicht in unmittelbarer räumlicher Nähe zum Werkzeug 4, angeordnet werden muss.

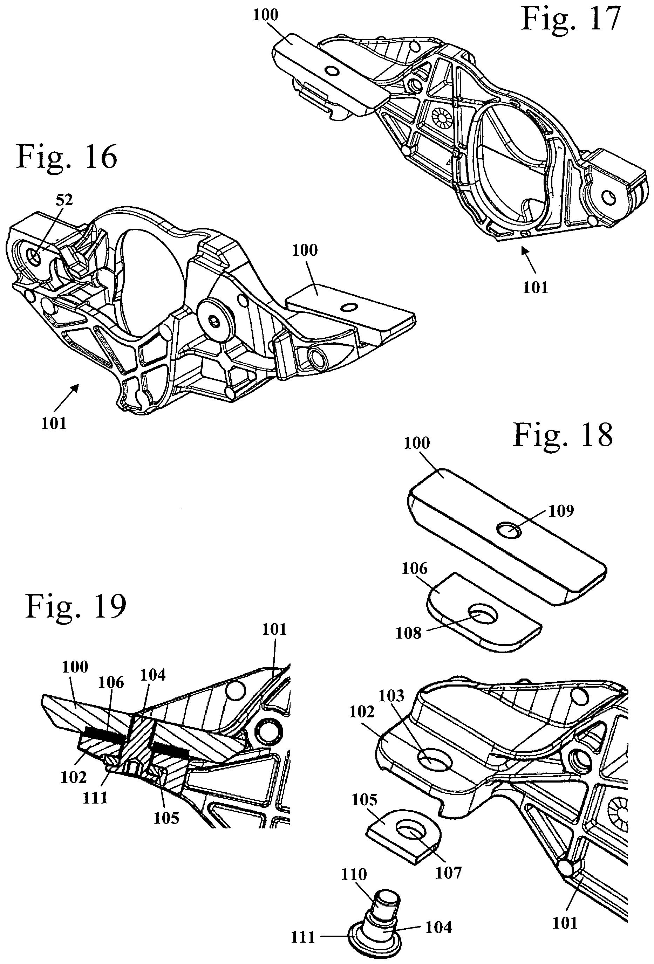

Die Figuren 16 bis 18 zeigen ein Beispiel eines Auslösehebels 101 für die Bremseinrichtung 25. Der Aufbau des Auslösehebels 101 entspricht im Wesentlichen dem des Auslösehebels 51. Der Auslösehebel 101 ist um eine Schwenkachse 52 schwenkbar gelagert. Am Auslösehebel 101 ist eine Halteplatte 100 festgelegt, die zum Ausgleich von Toleranzen gegenüber dem Auslösehebel 101 geringfügig beweglich, insbesondere verkippbar ist. Dadurch kann sichergestellt werden, dass die Halteplatte 100 flächig am Elektromagneten 44 anliegen kann, wodurch eine ausreichend hohe Haltekraft sichergestellt wird.

In den Figuren 18 und 19 ist die bewegliche Lagerung der Halteplatte 100 im Einzelnen gezeigt. Wie Fig. 18 zeigt, besitzt der Auslösehebel 101 einen Befestigungsbereich 102, an dem die Halteplatte 100 fixiert ist. Durch den Befestigungsbereich 102 erstreckt sich eine Befestigungsöffnung 103, durch die eine Befestigungsschraube 104 ragt. Die Befestigungsschraube 104 ist im Ausführungsbeispiel in die Halteplatte 100 eingeschraubt. Hierzu besitzt die Befestigungsschraube 104 einen Gewindeabschnitt 110, der in eine mit einem Innengewinde versehene Befestigungsöffnung 109 der Halteplatte 100 eingeschraubt ist. Zwischen dem Kopf 111 der Befestigungsschraube 104 und dem Befestigungsbereich 102 ist ein Dämpfungselement 105 angeordnet. Das Dämpfungselement 105 besitzt eine Befestigungsöffnung 107, durch die die Befestigungsschraube 104 ragt. Zwischen dem Befestigungsbereich 102 und der Halteplatte 100 ist ein weiteres Dämpfungselement 106 angeordnet, das eine Befestigungsöffnung 108 besitzt, durch die die Befestigungsschraube 104 ragt. Die Dämpfungselemente 105 und 106 bestehen aus einem elastischen Material und sind im Ausführungsbeispiel als ebene Platten ausgebildet.

Fig. 19 zeigt den Aufbau in zusammengebautem Zustand. Zwischen dem Kopf 111 der Befestigungsschraube 104 und dem Befestigungsbereich 102 ist das Dämpfungselement 105 angeordnet und an der gegenüberliegenden Seite des Befestigungsbereichs 102 ist die Halteplatte 100 angeordnet. Das Dämpfungselement 106 ist zwischen Befestigungsbereich 102 und Halteplatte 100 angeordnet und ragt im Ausführungsbeispiel in eine Vertiefung der Halteplatte 100. Die Anordnung ist dabei so getroffen, dass die Halteplatte 100 gegenüber dem Befestigungsbereich 102 des Auslösehebels 101 geringfügig beweglich, insbesondere um ihre Längsachse und um ihre Querachse verkippbar ist. Dadurch können Toleranzen zwischen der Halteplatte 100 und dem Elektromagneten 44 ausgeglichen werden, und die Halteplatte 100 kann flächig am Elektromagneten 44 anliegen.

Auch andere Gestaltungen zum Ausgleich der Toleranzen zwischen Halteplatte 50, 100 und Elektromagneten 44 können zweckmäßig sein.

## Patentansprüche

1. Handgeführtes Arbeitsgerät mit einem Antriebsmotor (14), der über einen Riementrieb (70) ein Werkzeug (4) rotierend antreibt, wobei der Riementrieb (70) mindestens eine erste, antreibende Riemenscheibe (27), mindestens eine zweite, angetriebene Riemenscheibe (28) aufweist, wobei die zweite Riemenscheibe (28) drehfest mit dem Werkzeug (4) verbunden ist, wobei die Drehzahl der zweiten Riemenscheibe (28) im Betrieb kleiner als die Drehzahl der ersten Riemenscheibe (27) ist, wobei zwischen der ersten Riemenscheibe (27) und der zweiten Riemenscheibe (28) mindestens ein erster Antriebsriemen (31) einer ersten Antriebsstufe und ein zweiter Antriebsriemen (32) einer zweiten Antriebsstufe zur Übertragung des Antriebsmoments wirken, wobei die erste Antriebsstufe und die zweite Antriebsstufe jeweils eine Drehzahlverringerung bewirken, wobei der zweite Antriebsriemen (32) über die zweite Riemenscheibe (28) geführt ist, und wobei der Riementrieb (70) mindestens eine Umlenkrolle (36) umfasst, die an mindestens einem Antriebsriemen (31, 32) anliegt,
**dadurch gekennzeichnet, dass** das Arbeitsgerät eine Bremseinrichtung (25) besitzt, die auf den Riementrieb (70) wirkt, und dass die mindestens eine Umlenkrolle (36) an dem Antriebsriemen (32) anliegt, über den im Betrieb das höchste Antriebsmoment übertragen wird.

2. Arbeitsgerät nach Anspruch 1,
**dadurch gekennzeichnet, dass** an jedem Antriebsriemen (31, 32) mindestens eine Umlenkrolle (35, 36) anliegt.

3. Arbeitsgerät nach Anspruch 1 oder 2,
**dadurch gekennzeichnet, dass** die Umlenkrolle (35, 36) im Betrieb des Arbeitsgeräts ortsfest gehalten ist.

4. Arbeitsgerät nach Anspruch 3,
**dadurch gekennzeichnet, dass** die Umlenkrolle (35, 36) über eine lösbare Fixiereinrichtung (37) ortsfest gehalten ist, und dass die Umlenkrolle (35, 36) bei gelöster Fixiereinrichtung (37) schwenkbar und gefedert gelagert ist.

5. Arbeitsgerät nach einem der Ansprüche 1 bis 4,
**dadurch gekennzeichnet, dass** jede Riemenscheibe (27, 28, 29, 30) des Riementriebs (70) über einen Umschlingungswinkel (α, β, γ, δ) von mehr als etwa 170° von einem Antriebsriemen (31, 32) des Riementriebs (70) umschlungen ist.

6. Arbeitsgerät nach Anspruch 5,
**dadurch gekennzeichnet, dass** mindestens eine Riemenscheibe (28, 29) über einen Umschlingungswinkel (β, δ) von mehr als etwa 220° von einem Antriebsriemen (31, 32) des Riementriebs (70) umschlungen ist.

7. Arbeitsgerät nach einem der Ansprüche 1 bis 6,
**dadurch gekennzeichnet, dass** die Bremseinrichtung (25) auf die erste Riemenscheibe (27) wirkt.

8. Arbeitsgerät nach einem der Ansprüche 1 bis 7,
**dadurch gekennzeichnet, dass** der erste Antriebsriemen (31) über die erste Riemenscheibe (27) und eine dritte Riemenscheibe (29) geführt ist, wobei die dritte Riemenscheibe (29) mit einer vierten Riemenscheibe (30) drehfest verbunden ist und wobei der zweite Antriebsriemen (32) über die vierte Riemenscheibe (30) geführt ist.

9. Arbeitsgerät nach Anspruch 8,
**dadurch gekennzeichnet, dass** der Durchmesser (c) der vierten Riemenscheibe (30) kleiner als der Durchmesser (b) der dritten Riemenscheibe (29) ist.

10. Arbeitsgerät nach einem der Ansprüche 1 bis 9,
**dadurch gekennzeichnet, dass** die erste Riemenscheibe (27) im Betrieb vom Antriebsmotor (14) angetrieben ist.

11. Arbeitsgerät nach einem der Ansprüche 1 bis 10,
**dadurch gekennzeichnet, dass** die Bremseinrichtung (25) ein Bremsband (26) umfasst, das auf eine Bremstrommel (24) wirkt, wobei die Bremstrommel (24) drehfest mit der ersten Riemenscheibe (27) verbunden ist.

12. Arbeitsgerät nach einem der Ansprüche 1 bis 11,
**dadurch gekennzeichnet, dass** die Bremseinrichtung (25) eine Bremsstellung (41) und eine Freigabestellung (42) besitzt, wobei die Bremseinrichtung (25) von einer Halteeinrichtung (43) in der Freigabestellung (42) gehalten ist und von einer Auslösefeder (45) in Richtung auf die Bremsstellung (41) vorgespannt ist.

13. Arbeitsgerät nach Anspruch 12,
**dadurch gekennzeichnet, dass** das Arbeitsgerät ein Betätigungselement (9) besitzt, über das die Bremseinrichtung (25) aus der Bremsstellung (41) in die Freigabestellung (42) verstellbar ist.

14. Arbeitsgerät nach einem der Ansprüche 11 bis 13,
**dadurch gekennzeichnet, dass** die Halteeinrichtung (43) einen Elektromagneten (44) umfasst.

15. Arbeitsgerät nach Anspruch 14,
**dadurch gekennzeichnet, dass** das Arbeitsgerät eine Steuerungseinrichtung (57) und einen Sensor besitzt, und dass die Steuerungseinrichtung (57) bei Vorliegen mindestens eines von dem Sensor ermittelten Auslösekriteriums ein Lösen der Halteeinrichtung (43) verursacht.

16. Arbeitsgerät nach Anspruch 15,
**dadurch gekennzeichnet, dass** der Sensor ein Drehratensensor (40) ist, der die Winkelgeschwindigkeit einer Bewegung des Arbeitsgeräts um eine zur Drehachse (74) des Werkzeugs (4) parallelen Achse ermittelt und das ein Auslösekriterium das Überschreiten einer vorgegebenen Winkelgeschwindigkeit um diese Achse ist.

17. Arbeitsgerät nach einem der Ansprüche 1 bis 16,
**dadurch gekennzeichnet, dass** die Drehzahl der zweiten Riemenscheibe (28) höchstens 60% der Drehzahl der ersten Riemenscheibe (27) beträgt.

18. Arbeitsgerät nach einem der Ansprüche 1 bis 17,
**dadurch gekennzeichnet, dass** das Arbeitsgerät ein Trennschleifer (1) und das Werkzeug (4) eine Trennscheibe ist.

19. Arbeitsgerät nach Anspruch 18,
**dadurch gekennzeichnet, dass** die Drehzahl der Trennscheibe weniger als 4000 U/Min. beträgt.

## Claims

1. Handheld work apparatus with a drive motor (14) which drives a tool (4) in a rotating manner via a belt drive (70), wherein the belt drive (70) has at least one first driving belt pulley (27) and at least one second driven belt pulley (28), wherein the second belt pulley (28) is connected to the tool (4) for rotation therewith, wherein the rotational speed of the second belt pulley (28) during operation is lower than the rotational speed of the first belt pulley (27), wherein at least one first drive belt (31) of a first drive stage and a second drive belt (32) of a second drive stage act between the first belt pulley (27) and the second belt pulley (28) for transmitting the drive torque, wherein the first drive stage and the second drive stage each bring about a reduction in the rotational speed, wherein the second drive belt (32) is guided via the second belt pulley (28), and wherein the belt drive (70) comprises at least one deflection roller (36) which lies against at least one drive belt (31, 32),
**characterized in that** the work apparatus has a brake device (25) which acts upon the belt drive (70), and **in that** the at least one deflection roller (36) lies against the drive belt (32) via which the greatest drive torque is transmitted during operation.

2. Work apparatus according to Claim 1,
**characterized in that** at least one deflection roller (35, 36) lies against each drive belt (31, 32).

3. Work apparatus according to Claim 1 or 2,
**characterized in that** the deflection roller (35, 36) is held in a fixed position during operation of the work apparatus.

4. Work apparatus according to Claim 3,
**characterized in that** the deflection roller (35, 36) is held in a fixed position via a releasable fixing device (37), and **in that** the deflection roller (35, 36) is mounted in a pivotable and sprung manner when the fixing device (37) is released.

5. Work apparatus according to one of Claims 1 to 4,
**characterized in that** each belt pulley (27, 28, 29, 30) of the belt drive (70) is wrapped by a wrap angle (α, β, y, δ) of more than approximately 170° by a drive belt (31, 32) of the belt drive (70).

6. Work apparatus according to Claim 5,
**characterized in that** at least one belt pulley (28, 29) is wrapped by a wrap angle (β, δ) of more than approximately 220° by a drive belt (31, 32) of the belt drive (70).

7. Work apparatus according to one of Claims 1 to 6,
**characterized in that** the brake device (25) acts on the first belt pulley (27).

8. Work apparatus according to one of Claims 1 to 7,
**characterized in that** the first drive belt (31) is guided via the first belt pulley (27) and a third belt pulley (29), wherein the third belt pulley (29) is connected to a fourth belt pulley (30) for rotation therewith, and wherein the second drive belt (32) is guided via the fourth belt pulley (30).

9. Work apparatus according to Claim 8,
**characterized in that** the diameter (c) of the fourth belt pulley (30) is smaller than the diameter (b) of the third belt pulley (29).

10. Work apparatus according to one of Claims 1 to 9,
**characterized in that** the first belt pulley (27) is driven by the drive motor (14) during operation.

11. Work apparatus according to one of Claims 1 to 10,
**characterized in that** the brake device (25) comprises a brake band (26) which acts on a brake drum (24), wherein the brake drum (24) is connected to the first belt pulley (27) for rotation therewith.

12. Work apparatus according to one of Claims 1 to 11,
**characterized in that** the brake device (25) has a braking position (41) and a release position (42), wherein the brake device (25) is held in the release position (42) by a holding device (43) and is pretensioned in the direction of the braking position (41) by a release spring (45).

13. Work apparatus according to Claim 12,
**characterized in that** the work apparatus has an actuation element (9) via which the brake device (25) is adjustable from the braking position (41) into the release position (42).

14. Work apparatus according to one of Claims 11 to 13,
**characterized in that** the holding device (43) comprises an electromagnet (44).

15. Work apparatus according to Claim 14,
**characterized in that** the work apparatus has a control device (57) and a sensor, and **in that** the control device (57) causes release of the holding device (43) when at least one release criterion determined by the sensor is present.

16. Work apparatus according to Claim 15,
**characterized in that** the sensor is a rate of rotation sensor (40) which determines the angular speed of a movement of the work apparatus about an axis parallel to the axis of rotation (74) of the tool (4), and the one release criterion is the exceeding of a predetermined angular speed about said axis.

17. Work apparatus according to one of Claims 1 to 16,
**characterized in that** the rotational speed of the second belt pulley (28) is at maximum 60% of the rotational speed of the first belt pulley (27).

18. Work apparatus according to one of Claims 1 to 17,
**characterized in that** the work apparatus is a cut-off grinder (1) and the tool (4) is a cut-off wheel.

19. Work apparatus according to Claim 18, **characterized in that** the rotational speed of the cut-off wheel is less than 4000 rpm.

## Revendications

1. Appareil de travail tenu à la main comportant un moteur d'entraînement (14) qui entraîne en rotation un outil (4) par le biais d'une transmission à courroie (70), la transmission à courroie (70) comprenant au moins une première poulie à courroie (27) d'entraînement, et au moins une deuxième poulie à courroie (28) entraînée, la deuxième poulie à courroie (28) étant reliée de manière solidaire en rotation à l'outil (4), la vitesse de rotation de la deuxième poulie à courroie (28) étant inférieure à la vitesse de rotation de la première poulie à courroie (27) lors du fonctionnement, au moins une première courroie d'entraînement (31) d'un premier étage d'entraînement et une deuxième courroie d'entraînement (32) d'un deuxième étage d'entraînement agissant entre la première poulie à courroie (27) et la deuxième poulie à courroie (28) pour la transmission du couple d'entraînement, le premier étage d'entraînement et le deuxième étage d'entraînement provoquant respectivement une réduction de la vitesse de rotation, la deuxième courroie d'entraînement (32) étant guidée sur la deuxième poulie à courroie (28), et la transmission à courroie (70) comportant au moins une poulie de renvoi (36) qui s'applique contre au moins une courroie d'entraînement (31, 32),
**caractérisé en ce que** l'appareil de travail possède un dispositif de freinage (25) qui agit sur la transmission à courroie (70), et **en ce que** l'au moins une poulie de renvoi (36) s'applique contre la courroie d'entraînement (32) par le biais de laquelle le plus grand couple d'entraînement est transmis lors du fonctionnement.

2. Appareil de travail selon la revendication 1,
**caractérisé en ce qu'**au moins une poulie de renvoi (35, 36) s'applique contre chaque courroie d'entraînement (31, 32).

3. Appareil de travail selon la revendication 1 ou 2,
**caractérisé en ce que** la poulie de renvoi (35, 36) est maintenue immobile lors du fonctionnement de l'appareil de travail.

4. Appareil de travail selon la revendication 3,
**caractérisé en ce que** la poulie de renvoi (35, 36) est maintenue immobile par le biais d'un dispositif de fixation (37) pouvant être desserré, et **en ce que** la poulie de renvoi (35, 36) est montée pivotante et sur ressort lorsque le dispositif de fixation (37) est desserré.

5. Appareil de travail selon l'une des revendications 1 à 4,
**caractérisé en ce qu'**une courroie d'entraînement (31, 32) de la transmission à courroie (70) s'enroule sur chaque poulie à courroie (27, 28, 29, 30) de la transmission à courroie (70) sur un angle d'enroulement (α, β, y, δ) supérieur à environ 170°.

6. Appareil de travail selon la revendication 5,
**caractérisé en ce qu'**une courroie d'entraînement (31, 32) de la transmission à courroie (70) s'enroule sur au moins une poulie à courroie (28, 29) sur un angle d'enroulement (β, δ) supérieur à environ 220°.

7. Appareil de travail selon l'une des revendications 1 à 6,
**caractérisé en ce que** le dispositif de freinage (25) agit sur la première poulie à courroie (27).

8. Appareil de travail selon l'une des revendications 1 à 7,
**caractérisé en ce que** la première courroie d'entraînement (31) est guidée sur la première poulie à courroie (27) et une troisième poulie à courroie (29), la troisième poulie à courroie (29) étant reliée de manière solidaire en rotation à une quatrième poulie à courroie (30), et la deuxième courroie d'entraînement (32) étant guidée sur la quatrième poulie à courroie (30).

9. Appareil de travail selon la revendication 8,
**caractérisé en ce que** le diamètre (c) de la quatrième poulie à courroie (30) est inférieur au diamètre (b) de la troisième poulie à courroie (29).

10. Appareil de travail selon l'une des revendications 1 à 9,
**caractérisé en ce que** la première poulie à courroie (27) est entraînée par le moteur d'entraînement (14) lors du fonctionnement.

11. Appareil de travail selon l'une des revendications 1 à 10,
**caractérisé en ce que** le dispositif de freinage (25) comprend une bande de freinage (26) qui agit sur un tambour de frein (24), le tambour de frein (24) étant relié de manière solidaire en rotation à la première poulie à courroie (27).

12. Appareil de travail selon l'une des revendications 1 à 11,
**caractérisé en ce que** le dispositif de freinage (25) présente une position de freinage (41) et une position de déblocage (42), le dispositif de freinage (25) étant retenu par un dispositif de retenue (43) dans la position de déblocage (42) et étant précontraint par un ressort de déclenchement (45) en direction de la position de freinage (41).

13. Appareil de travail selon la revendication 12,
**caractérisé en ce que** l'appareil de travail comporte un élément d'actionnement (9) par le biais duquel le dispositif de freinage (25) est déplaçable de la position de freinage (41) à la position de déblocage (42).

14. Appareil de travail selon l'une des revendications 11 à 13,
**caractérisé en ce que** le dispositif de retenue (43) comprend un électroaimant (44).

15. Appareil de travail selon la revendication 14,
**caractérisé en ce que** l'appareil de travail comporte un dispositif de commande (57) et un capteur, et **en ce que** le dispositif de commande (57), en présence d'au moins un critère de déclenchement détecté par le capteur, provoque un desserrage du dispositif de retenue (43).

16. Appareil de travail selon la revendication 15,
**caractérisé en ce que** le capteur est un capteur de vitesse angulaire (40) qui détermine la vitesse angulaire d'un mouvement de l'appareil de travail autour d'un axe parallèle à l'axe de rotation (74) de l'outil (4), et **en ce qu'**un critère de déclenchement est le dépassement d'une vitesse angulaire prédéfinie autour de cet axe.

17. Appareil de travail selon l'une des revendications 1 à 16,
**caractérisé en ce que** la vitesse de rotation de la deuxième poulie à courroie (28) est égale au maximum à 60% de la vitesse de rotation de la première poulie à courroie (27).

18. Appareil de travail selon l'une des revendications 1 à 17,
**caractérisé en ce que** l'appareil de travail est une tronçonneuse à meule (1), et l'outil (4) est une meule de tronçonnage.

19. Appareil de travail selon la revendication 18,
**caractérisé en ce que** la vitesse de rotation de la meule de tronçonnage est inférieure à 4000 tr/min.
